# EUROPÄISCHE PATENTSCHRIFT

(11) **EP 2 434 255 B1**
(45) Veröffentlichungstag und Bekanntmachung des Hinweises auf die Patenterteilung: **20.05.2015**
(21) Anmeldenummer: 11180673.3
(22) Anmeldetag: 09.09.2011
(51) Int. Cl.: G01B 11/06, G01B 17/02, B65C 9/42, G01V 11/00

(54) **Sensoranordnung**
Sensor assembly
Dispositif de détection

(30) Priorität: 25.09.2010 DE 202010013628 U
(43) Veröffentlichungstag der Anmeldung: 28.03.2012
(73) Patentinhaber: Leuze electronic GmbH + Co. KG, 73277 Owen/Teck (DE)
(72) Erfinder: Klaiber, Jörg, 71157 Hildrizhausen (DE); Merk, Thomas, 73240 Wendlingen (DE); Patz, Jürgen, 72660 Beuren (DE)
(74) Vertreter: Ruckh, Rainer Gerhard

(56) Entgegenhaltungen:
- EP-A1- 2 042 828
- DE-U1-202005 020 654
- DE-U1-202007 004 364
- JP-A- 61 193 005
- JP-A- 61 225 611

## Beschreibung

Die Erfindung betrifft eine Sensoranordnung gemäß dem Oberbegriff des Anspruchs 1.

Eine derartige Sensoranordnung ist aus der DE 20 2005 020 654 U1 bekannt. Die dort beschriebene Sensoranordnung dient zur Detektion von Etiketten auf einem Trägermaterial und umfasst einen optischen Sensor sowie einen Ultraschallsensor, welche über Schaltmittel wahlweise zur Detektion der Etiketten aktivierbar sind.

Sowohl der optische Sensor als auch der Ultraschallsensor arbeiten nach einer Transmissionsmessung, das heißt der Sender und der Empfänger des optischen Sensors einerseits sowie der Ultraschallsensor und der Ultraschallempfänger des Ultraschallsensors anderseits sind jeweils beidseits einer Nachweisebene, in welcher das Trägermaterial mit den Etiketten relativ zur Vorrichtung geführt wird, angeordnet. Dabei ist die Sensoranordnung in einem gabelförmigen Gehäuse mit zwei Gabelarmen, zwischen welchen die Nachweisebene verläuft, angeordnet. Die Komponenten des optischen Sensors und des Ultraschallsensors sind so in diesem Gehäuse angeordnet, dass sich die Strahlachse der Ultraschallwellen, die vom Ultraschallsender emittiert werden, und die optische Achse der Sendelichtstrahlen, die vom Sender emittiert werden, in der Nachweisebene schneiden. Damit ist der aktuelle Messort und Messzeitpunkt zur Etikettendetektion unabhängig davon, ob der Ultraschallsensor oder optische Sensor hierfür eingesetzt wird.

Da bei dieser Sensoranordnung wahlweise ein Ultraschallsensor oder ein optischer Sensor zur Etikettendetektion eingesetzt werden kann, wird mit dieser eine sichere Etikettendetektion für ein breites Materialspektrum von Etiketten- und Trägermaterialien erreicht.

Nachteilig hierbei ist, dass durch die Integration des Ultraschallsensors und des optischen Sensors in einem Gehäuse eine relativ große, starre und unflexible Bauform erhalten wird.

Eine weitere derartige Sensoranordnung ist aus der DE 10 2007 046 769 A1 bekannt. Diese Sensoranordnung umfasst einen Ultraschallsensor, in welchem ein optischer Sensor integriert ist.

Durch die Integration des optischen Sensors innerhalb des Ultraschallsensors wird eine besonders kompakte Sensoranordnung mit kleinem Bauvolumen erzielt. Ein weiterer Vorteil besteht darin, dass durch die Integration des optischen Sensors im Ultraschallsensor Bauteile eine Doppelfunktion derart übernehmen können, dass sie gleichzeitig funktionsrelevante Komponenten des optischen Sensors und des Ultraschallsensors bilden.

Derartige Bauteile stellen jedoch Sonderkonstruktionen dar, die relativ teuer in der Herstellung sind.

Aus der DE 20 2007 004 364 U1 ist eine Sensoranordnung mit einem Ultraschallsensor und einem optischen Sensor bekannt, deren einzelne Komponenten in einem gemeinsamen Gehäuse integriert sind.

Die JP 61 225 611 A betrifft einen als Taster arbeitenden Ultraschallsensor, an dessen Stirnseite ein optischer Sensor angebaut ist.

Die JP 61 193 005 A betrifft eine Fernsehkamera, an welche seitlich ein Ultraschall-Distanzsensor angebaut ist.

Der Erfindung liegt die Aufgabe zugrunde, eine Sensoranordnung der eingangs genannten Art bereitzustellen, welche mit einem geringen konstruktiven Aufwand herstellbar ist und dabei flexibel einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Sensoranordnung mit einem Ultraschallsensor und einem optischen Sensor. Der Ultraschallsensor und der optische Sensor sind über Kopplungsmittel verbunden und bilden eine Funktionseinheit. Der optische Sensor ist in einem Optiksensorgehäuse integriert. Der Ultraschallsensor ist in einem Ultraschallsensorgehäuse integriert. Durch mechanische Kopplungsmittel sind das Optiksensorgehäuse und das Ultraschallsensorgehäuse zu einer Baueinheit verbunden. Das Optiksensorgehäuse und Ultraschallsensorgehäuse sind jeweils gabelförmig ausgebildet. Das Optiksensorgehäuse ist in der Gabel des Ultraschallsensorgehäuses liegend mittels der mechanischen Kopplungsmittel fixiert. Der optische Sensor und der Ultraschallsensor sind über elektrische Kopplungsmittel verbunden, über welche ein Signalaustausch zwischen dem optischen Sensor und dem Ultraschallsensor erfolgt.

Ein wesentlicher Vorteil hierbei ist, dass der optische Sensor keine spezielle Anpassung an den Ultraschallsensor und auch umgekehrt der Ultraschallsensor keine spezielle Anpassung an den optischen Sensor aufweisen muss, so dass sowohl der optische Sensor als Optikstandardsensor und auch der Ultraschallsensor als Ultraschallstandardsensor ausgebildet sein kann, welche jeweils mit Standard-Komponenten kostengünstig hergestellt werden können. Die Kopplungsmittel zur Kopplung des Ultraschallsensors und des optischen Sensors bilden Adapter, die mit einem geringen konstruktiven Aufwand hergestellt werden können.

Besonders vorteilhaft ist, dass bei nicht betätigten Kopplungsmitteln der Ultraschallsensor und der optische Sensor separate, allein funktionsfähige Einheiten bilden. Die erfindungsgemäße Sensoranordnung ist damit äußerst flexibel einsetzbar, da der Ultraschallsensor und der optische Sensor sowohl unabhängig voneinander einsetzbar sind als auch als Komponenten eines übergeordneten Systems, welches eine erweiterte Funktionalität, beispielsweise einen größeren Detektionsbereich oder eine erhöhte Nachweisempfindlichkeit oder Fehlersicherheit aufweist.

Erfindungsgemäß ist der optische Sensor in einem Optiksensorgehäuse integriert. Der Ultraschallsensor ist in einem Ultraschallsensorgehäuse integriert. Durch mechanische Kopplungsmittel sind das Optiksensorgehäuse und das Ultraschallsensorgehäuse zu einer Baueinheit verbunden.

Die Kopplungsmittel die in Form von Steckverbindungen, Schienen oder dergleichen ausgebildet sein können, gewährleisten mit geringem konstruktiven Aufwand eine mechanische Kopplung des Ultraschallsensors und optischen Sensors, wobei zur Kopplung kein Eingriff in die Gehäusekonstruktionen beiden Einheiten nötig ist.

Erfindungsgemäß sind das Optiksensorgehäuse und das Ultraschallsensorgehäuse jeweils gabelförmig ausgebildet. Das Optiksensorgehäuse ist in der Gabel des Ultraschallsensorgehäuses liegend mittels der mechanischen Kopplungsmittel fixiert.

Die Gabeln des Optiksensorgehäuses und des Ultraschallsensorgehäuses sind damit so aufeinander abgestimmt, dass diese ineinander steckbare Einheiten derart bilden, dass die Baueinheit aus beiden Einheiten wieder eine Gabelform aufweist. Die so gebildete Baueinheit weist eine besonders kompakte Bauform auf. Weiterhin ist bei dieser Baueinheit vorteilhaft, dass ein zumindest näherungsweise koaxialer Strahlverlauf der Ultraschallwellen, die von einem Ultraschallsender des Ultraschallsensors emittiert werden, und der Lichtstrahlen, die von einem Sender des optischen Sensors emittiert werden, erhalten wird. Damit werden die zu detektierenden Objekte an einem Ort sowohl von den Ultraschallwellen als auch den Lichtstrahlen erfasst. Durch diese doppelte Detektion kann die Fehlersicherheit und Nachweisempfindlichkeit bei der Objektdetektion erheblich erhöht werden.

Vorteilhaft bei dieser Ausführungsform ist weiterhin, dass Gehäuse- oder Sensorkomponenten des optischen Sensors zusätzlich als Sensorkomponenten des Ultraschallsensors genutzt werden können. Da das gabelförmige Optiksensorgehäuse in die Gabel des Ultraschallsensorgehäuses eingepasst ist, können beispielsweise Komponenten des Optiksensorgehäuses so ausgebildet sein, dass diese Blenden für die Ultraschallwellen, die den optischen Sensor durchsetzen bilden.

Erfindungsgemäß sind der optische Sensor und der Ultraschallsensor über elektrische Kopplungsmittel verbunden, über welche ein Signalaustausch zwischen dem optischen Sensor und dem Ultraschallsensor erfolgt.

Die elektrische Kopplung führt dabei vorteilhaft aber nicht zwingend zusätzlich zu einer mechanischen Kopplung des Ultraschallsensors und des optischen Sensors. Besonders vorteilhaft können dabei Kopplungsmittel wie Steckverbindungen sowohl eine mechanische als auch eine elektrische Kopplung des Ultraschallsensors und des optischen Sensors bewirken.

Die elektrische Kopplung kann vorteilhaft derart ausgebildet sein, dass ein im optischen Sensor generiertes Ausgangssignal und ein im Ultraschallsensor generiertes Ausgangssignal im optischen Sensor oder Ultraschallsensor zu einem Objektfeststellungssignal verknüpft werden.

Insbesondere bilden die Ausgangssignale des optischen Sensors und des Ultraschallsensors jeweils Einzel-Objektfeststellungssignale. Im optischen Sensor oder Ultraschallsensor wird durch eine logische Verknüpfung das Einzel-Objektfeststellungssignal generiert.

Durch die Verknüpfung der mit dem optischen Sensor und dem Ultraschallsensor generierten Einzel-Objektfeststellungssignale zu einem Gesamt-Objektfeststellungssignal wird die Nachweissicherheit bei der Objektdetektion erhöht.

Zur Steigerung der Fehlersicherheit der Sensoranordnung wird vorteilhaft bei einer Fehlfunktion im optischen Sensor dort ein Warnsignal generiert und in den Ultraschallsensor eingelesen. Bei einer Fehlfunktion wird im Ultraschallsensor dort ein Warnsignal generiert und in den optischen Sensor eingelesen. Bei einem im optischen Sensor oder Ultraschallsensor generierten Warnsignal trägt dessen Einzel-Objektfeststellungssignal nicht zur Generierung des Objektfeststellungsignals bei.

Die erfindungsgemäße Sensoranordnung kann zur Detektion von Objekten unterschiedlicher Art eingesetzt werden. Besonders vorteilhaft wird die Sensoranordnung zur Detektion von mehrlagigen Objektstrukturen, insbesondere von Etiketten auf Trägermaterial, eingesetzt.

Die Erfindung wird im Folgenden anhand der Zeichnungen erläutert. Es zeigen:
- Figur 1:: Erste Ausführungsform der erfindungsgemäßen Sensoranordnung, bestehend aus einem optischen Sensor und Ultraschallsensor, die über Kopplungsmittel gekoppelt sind.
- Figur 2:: Draufsicht auf die Vorderseite der Sensoranordnung gemäß Figur 1.
- Figur 3:: Draufsicht auf einen Gabelarm des Optiksensorgehäuses des optischen Sensors der Sensoranordnung gemäß Figur 1.
- Figur 4:: Beispiel einer nicht-erfindungsgemäßen Sensoranordnung.

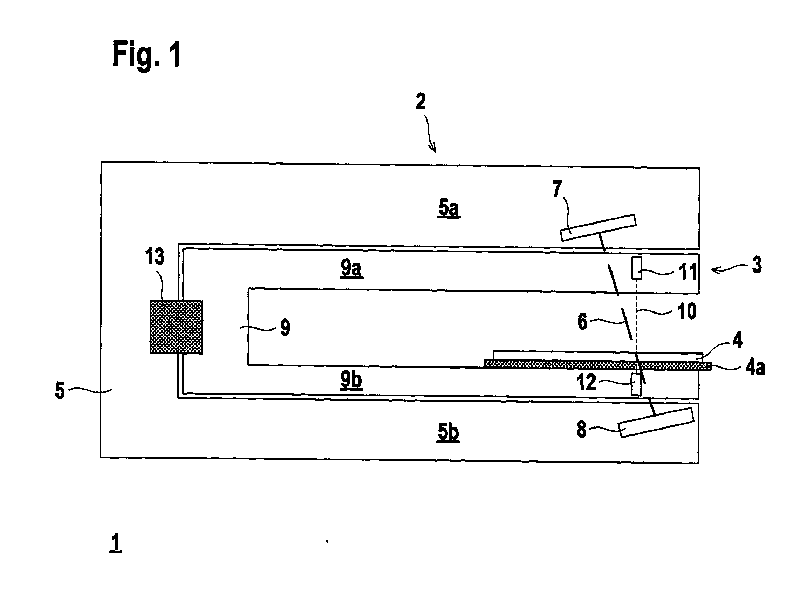

Figur 1 zeigt in einer Seitenansicht ein erstes Ausführungsbeispiel einer Sensoranordnung 1, bestehend aus einem Ultraschallsensor 2 und einem optischen Sensor 3. Die Sensoranordnung 1 dient im vorliegenden Fall zur Detektion von Etiketten 4, die auf einem Trägermaterial 4a, das ein Trägerband bildet, angeordnet sind.

Der Ultraschallsensor 2 ist in einem gabelförmigen Ultraschallsensorgehäuse 5 integriert, das zwei in Abstand zueinander parallel verlaufende Ultraschall-Gabelarme 5a, 5b aufweist. Im oberen Ultraschall-Gabelarm 5a ist ein Ultraschallwellen 6 emittierender Ultraschallsender 7 integriert, im unteren Ultraschall-Gabelarm 5b ist ein Ultraschallwellen 6 emittierender Ultraschallempfänger 8 integriert. Der Bereich zwischen dem Ultraschall-Gabelarm 5a bildet einen Überwachungsbereich, in welchem Objekte detektiert werden können. Zur Vermeidung stehender Wellen verläuft die Strahlachse der Ultraschallwellen 6 geneigt zur Vertikalen. Die Objektdetektion erfolgt nach dem Transmissionsprinzip. Hierzu wird in einer nicht dargestellten Auswerteeinheit die Amplitude des Empfangssignals des Ultraschallempfängers 8 mit einem Schwellwert bewertet. Daraus wird als Ausgangssignal ein binäres Schaltsignal generiert, dessen Schaltzustände angeben, ob sich ein Objekt, im vorliegenden Fall eine Etikette 4, im Überwachungsbereich befindet oder nicht.

Der optische Sensor 3 ist in einem gabelförmigen Optiksensorgehäuse 9 integriert, das zwei in Abstand zueinander parallel verlaufende Optik-Gabelarme 9a, 9b aufweist. Im oberen Optik-Gabelarm 9a ist ein Lichtstrahlen 10 emittierender Sender 11 integriert, im unteren Optik-Gabelarm 9b ist ein Lichtstrahlen 10 emittierender Empfänger 12 integriert. Auch in diesem Fall bildet der Bereich zwischen den Optik-Gabelarmen 9a, 9b den Überwachungsbereich, innerhalb dessen Objekte nach dem Transmissionsprinzip erfasst werden. In einer nicht dargestellten Auswerteeinheit des optischen Sensors 3 wird durch eine Schwellwertbewertung der Empfangssignale des Empfängers 12 als Ausgangssignal ein Schaltsignal generiert, dessen Schaltzustände angeben, ob sich ein Objekt im Überwachungsbereich befindet oder nicht.

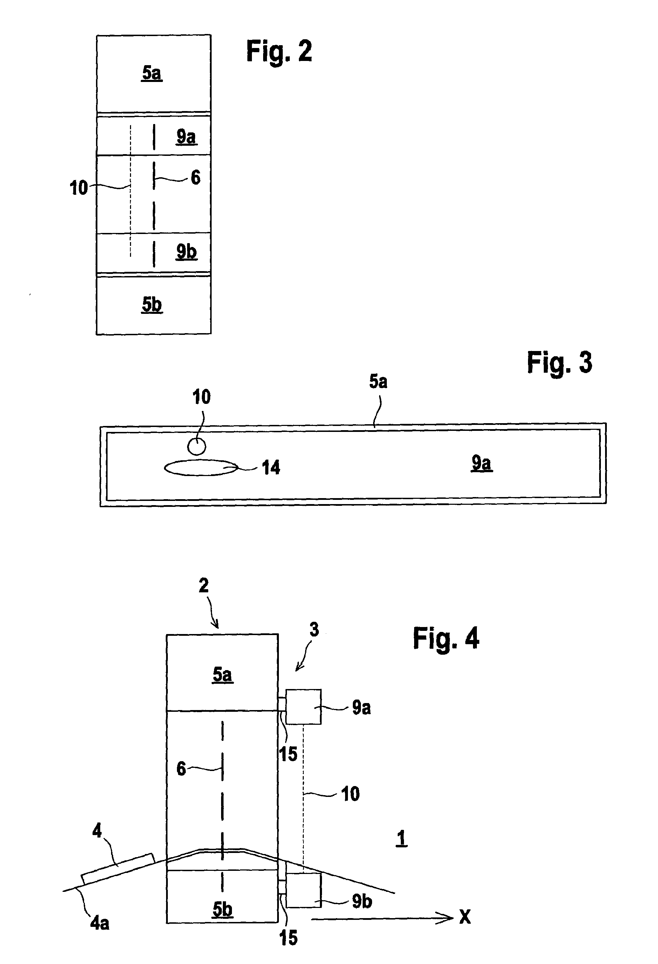

Wie aus Figur 1, welche die Seitenansicht der Sensoranordnung 1 zeigt, und auch aus Figur 2, welche eine Draufsicht auf die Vorderseite der Sensoranordnung 1 zeigt, ersichtlich, ist das Optiksensorgehäuse 9 kleiner als das Ultraschallsensorgehäuse 5, so dass zur Ausbildung der Sensorgehäuse das eine erste Gabel bildende Optiksensorgehäuse 9 in eine zweite Gabel bildende Ultraschallsensorgehäuse 5 eingeschoben wird. Die so gebildete Baueinheit bildet eine kombinierte Gabel, durch deren Zwischenraum das Trägermaterial 4a mit den zu detektierenden Etiketten 4 gefördert wird, wobei die Förderrichtung in Figur 2 mit x bezeichnet ist.

Wie aus Figur 1 ersichtlich, bildet der untere Optik-Gabelarm 9b eine Auflagefläche für das Trägermaterial 4a.

Die Kontur des Ultraschallgehäuses 5 im Bereich zwischen den Ultraschall-Gabelarmen 5a, 5b ist an die Außenkontur des Optiksensorgehäuses 9 so angepasst, dass die Gabel des Optiksensorgehäuses 9 passgenau in der Gabel des Ultraschallgehäuses 5 sitzt. In diesem Fall bildet ein Steckverbinder 13 das einzige mechanische Kopplungsmittel zwischen dem optischen Sensor 3 dem Ultraschallsensor 2. Zugleich bildet der Steckverbinder 13 ein elektrisches Kopplungsmittel. Prinzipiell könnten auch an den Ultraschall-Gabelarmen 5a, 5b und Optik-Gabelarmen 9a, 9b zusätzliche Führungsmittel oder Rastmittel zur Führung und Befestigung des Optiksensorgehäuses 9 am Ultraschallsensorgehäuse 5 vorgesehen sein.

Figur 3 zeigt eine Draufsicht auf die Unterseite des Optik-Gabelarms 9a, 9b des Optiksensorgehäuses 9. Wie aus Figur 3 ersichtlich, ist dicht neben dem Lichtfleck der Lichtstrahlen 10 in den Optik-Gabelarm 9a eine Blende 14 eingearbeitet. Mit dieser Blende 14 erfolgt eine Strahlformung der Ultraschallwellen 6, welche die Optik-Gabelarme 9a, 9b des optischen Sensors 3 durchsetzen. Prinzipiell kann im unteren Optik-Gabelarm 9b eine entsprechende Blendenanordnung für die Ultraschallwellen 6 vorgesehen sein. Wie weiter aus den Figuren 2 und 3 ersichtlich, verlaufen die Lichtstrahlen 10 und die Ultraschallwellen 6 in sehr geringem Abstand zueinander, so dass eine Etikette 4 mit den Ultraschallwellen 6 und den Lichtstrahlen 10 nahezu am selben Ort detektiert wird. Prinzipiell kann die Strahlführung so modifiziert sein, dass die Ultraschallwellen 6 genau koaxial zueinander verlaufen, so dass mit den Ultraschallwellen 6 und den Lichtstrahlen 10 an derselben Stelle die Objektdetektion erfolgt.

Die elektrische Kopplung zwischen optischem Sensor 3 und Ultraschallsensor 2 erfolgt derart, dass über den Steckverbinder 13 ein Signalaustausch zwischen optischem Sensor 3 und Ultraschallsensor 2 erfolgt. Im vorliegenden Fall bildet die Auswerteeinheit des optischen Sensors 3 eine Mastereinheit. Dieser Mastereinheit werden die Schaltsignale des Ultraschallsensors 2 als erste Einzel-Objektfeststellungssignale zugeführt. Zudem sind in der Mastereinheit die Schaltsignale des optischen Sensors 3 als zweite Einzel-Objektfeststellungssignale vorhanden. Aus den Einzel-Objektfeststellungssignalen wird in der Mastereinheit ein Objektfeststellungssignal, das heißt ein Gesamt-Objektfeststellungssignal generiert. Hierzu kann beispielsweise eine logsiche Verknüpfung der Einzel-Objektfeststellungssignale erfolgen.

Weiterhin wird sowohl in der Auswerteeinheit des optischen Sensors 3 als auch in der Auswerteeinheit des Ultraschallsensors 2 ein Warnsignal generiert, falls im jeweiligen Sensor eine Fehlfunktion vorliegt, beispielsweise wenn die Etiketten 4 mit dem jeweiligen Sensor nicht erkannt werden können. Die zentrale Auswertung der Warnsignale erfolgt in der Mastereinheit. Wird beispielsweise ein Warnsignal des optischen Sensors 3 registriert, wird als Fehlerbehebungsmaßnahme in der Mastereinheit das Objektfeststellungssignal nur aus dem Schaltsignal des Ultraschallsensors 2 abgeleitet. Entsprechendes gilt umgekehrt bei einem Warnsignal des Ultraschallsensors 2. Werden zeitgleich von beiden Sensoren Warnsignale generiert, wird von der Mastereinheit eine Fehlermeldung ausgegeben, die signalisiert, dass die Sensoranordnung 1 nicht mehr funktionsfähig ist.

Durch Lösen des Steckverbinders 13 können der Ultraschallsensor 2 und der optische Sensor 3 der Sensoranordnung 1 gemäß den Figuren 1 bis 3 jederzeit getrennt werden. Dann bilden der optische Sensor 3 und der Ultraschallsensor 2 selbstständige, voneinander unabhängige Sensoren.

Figur 4 zeigt ein Beispiel einer nicht-erfindungsgemäßen Sensor-anordnung 1. Auch hier ist der optische Sensor 3 in einem gabelförmigen Optiksensorgehäuse 9 mit zwei Optikgabelarmen 9a, 9b integriert. Weiterhin ist der Ultraschallsensor 2 in einem gabelförmigen Ultraschallsensorgehäuse 5 mit zwei Ultraschall-Gabelarmen 5a, 5b integriert.

Im vorliegenden Fall sind am Ultraschallsensorgehäuse 5 und Optiksensorgehäuse 9 seitlich Verbindungsschienen 15 als mechanische Kopplungsmittel vorgesehen, mittels derer der optische Sensor 3 und der Ultraschallsensor 2 nebeneinander liegend aneinander befestigt werden. Auch in diesem Fall wird durch Betätigen der mechanischen Kopplungsmittel eine Baueinheit von optischem Sensor 3 und Ultraschallsensor 2 erhalten.

Auch mit dieser Sensoranordnung 1 werden Etiketten 4 auf Trägermaterialien 4a detektiert, wobei das Trägermaterial 4a in der Förderrichtung x zunächst auf dem unteren Ultraschall-Gabelarm 5b des Ultraschallsensors 2 aufliegend und dann auf dem unteren Optik-Gabelarm 9b des optischen Sensors 3 aufliegend transportiert wird.

Zusätzlich zu den Verbindungsschienen 15 als mechanischen Kopplungsmitteln können auch Kopplungsmittel wie Steckverbindungen vorgesehen sein, um den Ultraschallsensor 2 und optischen Sensor 3 auch elektrisch zu koppeln. Die zentrale Auswertung von Signalen in einer Mastereinheit, die von einer der Auswerteeinheit beider Sensoren gebildet ist, erfolgt analog zur Ausführungsform der Figuren 1 und 4.

### Bezugszeichenliste

- (1): Sensoranordnung
- (2): Ultraschallsensor
- (3): optischer Sensor
- (4): Etikett
- (4a): Trägermaterial
- (5): Ultraschallsensorgehäuse
- (5a): oberer Ultraschall-Gabelarm
- (5b): unterer Ultraschall-Gabelarm
- (6): Ultraschallwellen
- (7): Ultraschallsender
- (8): Ultraschallempfänger
- (9): Optiksensorgehäuse
- (9a): oberer Optik-Gabelarm
- (9b): unterer Optik-Gabelarm
- (10): Lichtstrahlen
- (11): Sender
- (12): Empfänger
- (13): Steckverbinder
- (14): Blende
- (15): Verbindungsschiene

## Patentansprüche

1. Sensoranordnung (1) mit einem Ultraschallsensor (2) und einem optischen Sensor (3), wobei der Ultraschallsensor (2) und der optische Sensor (3) über Kopplungsmittel verbunden sind und eine Funktionseinheit bilden, **dadurch gekennzeichnet, dass** der optische Sensor (3) in einem Optiksensorgehäuse (9) integriert ist, dass der Ultraschallsensor (2) in einem Ultraschallsensorgehäuse (5) integriert ist, und dass durch mechanische Kopplungsmittel das Optiksensorgehäuse (9) und das Ultraschallsensorgehäuse (5) zu einer Baueinheit verbunden sind, dass das Optiksensorgehäuse (9) und das Ultraschallsensorgehäuse (5) jeweils gabelförmig ausgebildet sind, und dass das Optiksensorgehäuse (9) in der Gabel des Ultraschallsensorgehäuses (5) liegend mittels der mechanischen Kopplungsmittel fixiert ist, und dass der optische Sensor (3) und der Ultraschallsensor (2) über elektrische Kopplungsmittel verbunden sind, über welche ein Signalaustausch zwischen dem optischen Sensor (3) und dem Ultraschallsensor (2) erfolgt.

2. Sensoranordnung nach Anspruch 1, **dadurch gekennzeichnet, dass** bei nicht betätigten Kopplungsmitteln der Ultraschallsensor (2) und der optische Sensor (3) separate, allein funktionsfähige Einheiten bilden.

3. Sensoranordnung nach einem der Ansprüche 1 oder 2, **dadurch gekennzeichnet, dass** Teile des Optiksensorgehäuses (9) Blenden (14) für Ultraschallwellen (6) bilden, die von einem Ultraschallsender (7) des Ultraschallsensors (2) emittiert werden.

4. Sensoranordnung nach einem der Ansprüche 1 bis 3, **dadurch gekennzeichnet, dass** ein im optischen Sensor (3) generiertes Ausgangssignal und ein im Ultraschallsensor (2) generiertes Ausgangssignal im optischen Sensor (3) oder Ultraschallsensor (2) zu einem Objektfeststellungssignal verknüpft wird.

5. Sensoranordnung nach Anspruch 4, **dadurch gekennzeichnet, dass** die Ausgangssignale des optischen Sensors (3) und des Ultraschallsensors (2) jeweils Einzel-Objektfeststellungssignale bilden, und dass im optischen Sensor (3) oder Ultraschallsensor (2) durch eine logische Verknüpfung das Einzel-Objektfeststellungssignal generiert wird.

6. Sensoranordnung nach einem der Ansprüche 1 bis 5, **dadurch gekennzeichnet, dass** bei einer Fehlfunktion im optischen Sensor (3) dort ein Warnsignal generiert wird und in den Ultraschallsensor (2) eingelesen wird, und dass bei einer Fehlfunktion im Ultraschallsensor (2) dort ein Warnsignal generiert wird und in den optischen Sensor (3) eingelesen wird.

7. Sensoranordnung nach Anspruch 6, **dadurch gekennzeichnet, dass** bei einem im optischen Sensor (3) oder Ultraschallsensor (2) generierten Warnsignal dessen Einzel-Objektfeststellungssignal nicht zur Generierung des Objektfeststellungsignals beiträgt.

8. Sensoranordnung nach einem der Ansprüche 1 bis 7, **dadurch gekennzeichnet, dass** mit dieser auf Trägermaterial (4a) aufgebrachte Etiketten (4) detektiert werden.

## Claims

1. Sensor arrangement (1) with an ultrasonic sensor (2) and an optical sensor (3), wherein the ultrasonic sensor (2) and the optical sensor (3) are connected by way of coupling means and form a functional unit, **characterised in that** the optical sensor (3) is integrated in an optical sensor housing (9), that the ultrasonic sensor (2) is integrated in an ultrasonic sensor housing (5), that the optical sensor housing (9) and the ultrasonic sensor housing (5) are connected by mechanical coupling means to form a constructional unit, that the optical sensor housing (9) and the ultrasonic sensor housing (5) are each of forkshaped construction, that the optical sensor housing (9) is fixed in the fork of the ultrasonic sensor housing (5) by means of the mechanical coupling means to be horizontal and that the optical sensor (3) and the ultrasonic sensor (2) are connected by way of electrical coupling means via which signal exchange between the optical sensor (3) and the ultrasonic sensor (2) takes place.

2. Sensor arrangement according to claim 1, **characterised in that** when the coupling means are not actuated the ultrasonic sensor (2) and the optical sensor (3) form separate units with individual functional capability.

3. Sensor arrangement according to one of claims 1 and 2, **characterised in that** parts of the optical sensor housing (9) form apertures (14) for ultrasonic waves (6) emitted by an ultrasonic transmitter (7) of the ultrasonic sensor (2).

4. Sensor arrangement according to any one of claims 1 to 3, **characterised in that** an output signal generated in the optical sensor (3) and an output signal generated in the ultrasonic sensor (2) are linked in the optical sensor (3) or ultrasonic sensor (2) to form an object detection signal.

5. Sensor arrangement according to claim 4, **characterised in that** the output signals of the optical sensor (3) and the ultrasonic sensor (2) form respective individual object detection signals and that the individual object detection signal is generated in the optical sensor (3) or ultrasonic sensor (2) by logical linking.

6. Sensor arrangement according to any one of claims 1 to 5, **characterised in that** in the case of faulty functioning in the optical sensor (3) a warning signal is generated there and read into the ultrasonic sensor (2) and that in the case of faulty functioning in the ultrasonic sensor (2) a warning signal is generated there and read into the optical sensor (3).

7. Sensor arrangement according to claim 6, **characterised in that** when a warning signal is generated in the optical sensor or ultrasonic sensor (2) the individual object detection signal thereof does not contribute to generation of the object detection signal.

8. Sensor arrangement according to any one of claims 1 to 7, **characterised in that** labels (4) applied to carrier material (4a) are detected by this arrangement.

## Revendications

1. Dispositif de détection (1) comportant un capteur à ultrasons (2) et un capteur optique (3), le capteur à ultrasons (2) et le capteur optique (3) étant reliés par des moyens de couplage et formant une unité fonctionnelle, **caractérisé en ce que** le capteur optique (3) est intégré dans un boîtier de capteur optique (9), que le capteur à ultrasons (2) est intégré dans un boîtier de capteur à ultrasons (5) et que le boîtier de capteur optique (9) et le boîtier de capteur à ultrasons (5) sont reliés en une unité de construction par des moyens de couplage mécaniques, que le boîtier de capteur optique (9) et le boîtier de capteur à ultrasons (5) sont réalisés chacun en forme de fourche, et que le boîtier de capteur optique (9) est fixé à plat dans la fourche du boîtier de capteur à ultrasons (5) au moyen des moyens de couplage mécaniques, et que le capteur optique (3) et le capteur à ultrasons (2) sont reliés par des moyens de couplage électriques par l'intermédiaire desquels un échange de signaux a lieu entre le capteur optique (3) et le capteur à ultrasons (2).

2. Dispositif de détection selon la revendication 1, **caractérisé en ce que** lorsque les moyens de couplage ne sont pas actionnés, le capteur à ultrasons (2) et le capteur optique (3) forment des unités séparées, fonctionnant isolément.

3. Dispositif de détection selon l'une des revendications 1 ou 2, **caractérisé en ce que** des parties du boîtier de capteur optique (9) forment des écrans (14) pour les ondes ultrasonores (6) qui sont émises par un émetteur d'ultrasons (7) du capteur à ultrasons (2).

4. Dispositif de détection selon l'une des revendications 1 à 3, **caractérisé en ce qu'**un signal de sortie généré dans le capteur optique (3) et un signal de sortie généré dans le capteur à ultrasons (2) sont combinés en un signal de détection d'objet dans le capteur optique (3) ou le capteur à ultrasons (2).

5. Dispositif de détection selon la revendication 4, **caractérisé en ce que** les signaux de sortie du capteur optique (3) et du capteur à ultrasons (2) forment chaque fois des signaux individuels de détection d'objet, et que le signal individuel de détection d'objet est généré par une combinaison logique dans le capteur optique (3) ou le capteur à ultrasons (2).

6. Dispositif de détection selon l'une des revendications 1 à 5, **caractérisé en ce qu'**en cas de dysfonctionnement dans le capteur optique (3), un signal d'avertissement est généré dans celui-ci et lu dans le capteur à ultrasons (2), et qu'en cas de dysfonctionnement dans le capteur à ultrasons (2), un signal d'avertissement est généré dans celui-ci et lu dans le capteur optique (3).

7. Dispositif de détection selon la revendication 6, **caractérisé en ce que** lorsqu'un signal d'avertissement est généré dans le capteur optique (3) ou le capteur à ultrasons (2), son signal individuel de détection d'objet ne contribue pas à la génération du signal de détection d'objet.

8. Dispositif de détection selon l'une des revendications 1 à 7, **caractérisé en ce que** celui-ci est utilisé pour détecter des étiquettes (4) appliquées sur un matériau de support (4a).
